(19) Europäisches Patentamt
European Patent Office
Office européen des brevets

(11) **EP 0 805 216 B1**

(12) **EUROPEAN PATENT SPECIFICATION**

(45) Date of publication and mention
of the grant of the patent:
**16.04.2003 Bulletin 2003/16**

(51) Int Cl.⁷: $C21C\ 1/10$, $C22C\ 33/10$

(21) Application number: **97101197.8**

(22) Date of filing: **27.01.1997**

(54) **Preconditioning of cast iron smelted in an electric furnace to produce safety part castings**

Vorbehandlung von in einem Elektroofen erscholzenem Gusseisen für Sicherheitsgussteile

Prétraitement de fonte dans un four électrique pour la production de pièces de sécurité mouleés

(84) Designated Contracting States:
**DE ES FR IT**

(30) Priority: **03.05.1996 IT MI960874**

(43) Date of publication of application:
**05.11.1997 Bulletin 1997/45**

(73) Proprietor: **Metal Trading International S.r.l.**
**34170 Gorizia (IT)**

(72) Inventor: **Cattaneo, Rinaldo**
**20146 Milan (IT)**

(74) Representative: **Modiano, Guido, Dr.-Ing. et al**
**Modiano & Associati SpA**
**Via Meravigli, 16**
**20123 Milano (IT)**

(56) References cited:
WO-A-92/01072          BE-A- 624 534
CA-A- 1 100 762          DE-A- 2 034 806
FR-A- 2 410 677

- DATABASE WPI Section Ch, Week 7801 Derwent Publications Ltd., London, GB; Class M24, AN 78-01193A XP002029168 & JP 52 138 417 A (MITSUBISHI CHEM IND LTD) , 18 November 1977

**Description**

The present invention relates to a method for treating, in the liquid state, cast iron produced with electric furnaces, the method being adapted for eliminating some fundamental metallurgical shortcomings, which are currently still accepted as being unavoidable in smelting operations performed with these furnaces and which, because of their difficult control, penalize the work of the production department and may negatively affect the quality of the resulting castings. Other typical characteristics of the invention are the ability to thoroughly purify the metal bath and to overcome the so-called "evanescence" of the positive action promoted by inoculants; the importance of these problems has been increased by the growing diffusion of automated casting facilities. By speeding up all the steps of the production cycle, automation has imposed deep changes to conventional metallurgical methods, on penalty of not being able to meet the new throughput timings of casting lines, and even more damagingly, on penalty of likewise not being able to ensure constant product quality.

Publication no. WO92/01072 relates to a process for making as-cast ferritic spheroidal graphitic ductile iron. This document discloses inoculation of the melt by means of the addition of cerium after deslagging of the melt has occurred.

Furthermore, it is known from document DE 2 034 806 to add a certain quantity of silicon carbide to cast iron in order to melt the iron at high temperatures. It is taught that the silicon carbide can be added before or after the iron has been melted; furthermore, its addition can occur when the iron is melted in an electric furnace, as well.

Document FR 624 534 teaches the addition of inoculating agents to the iron cast material at the exit of the furnace or smelter. The inoculating agent disclosed in this document is necessarily associated with a certain quantity of carbon, possibly in the form of graphite, and usually contains some amount of silicon or iron, possibly in an alloy with other elements.

The following is a limited but significant example, which pointed out the need to undertake our research: while testing safety part castings such as drum brakes meant for the automotive industry, automatic casting showed severe variations with respect to the quality levels that have always been ensured by manual casting: when hardness values compliant with the specifications were achieved, alarming decreases in mechanical strength often occurred and were inexplicable in the light of the conclusions that could be drawn from the inspection of the various aspects which were placed under continuous and intense control.

With the obvious need to overcome these reliability shortcomings, the research could not avoid defining, and using as groundwork, a thought-out diagnosis of the anomalies of any kind that could be justifiably linked to the changes caused by automation.

Assuming that the liquid cast iron that left the melting furnace was normal according to conventional references, the mentioned diagnosis pointed out the following shortcomings:

1) advancement of the casting line with excessive alternations: despite scrupulous deslagging upstream of the automatic casting furnace, said furnace was the site of continuous slag formation, to the point of clogging the feeder and casting siphons, thus compromising uniformity of the metal flow.

The functional incompatibilities of the plug sleeve, including dimensional changes, which cause frequent rejects because of failed, i.e. incomplete, castings, could also be ascribed to said slag.

The outlined drawbacks combined productivity loss with unpleasant exposure of the furnace operators, who were forced to intervene almost continuously to remove the deslagged masses.

2) highly variable metallographic situations and accordingly variable mechanical characteristics. The various assays concentrated on inoculation, despite the wide variation in the tested sequence, did not solve or reduce the problems. Indeed, when it was decided to give greater incidence to so-called late intervention on the stream, the structural condition showed immediate and evident benefits but rejects due to inclusions soon worsened.

3) decrease in the degree of mechanical workability of the castings, with peaks exceeding 50% with respect to previous statistics, combined with breakages of the inserts or shorter life thereof. The occurrence of rejects due to micro- or macro-blowholes, which became evident after machining of the casting, was also frequent.

Having indicated these as being the primary issues and therefore the first shortcomings to be eliminated, the orientation given to our research came as a consequence and necessarily had to consider all convergence factors, starting from those that are typical of electric induction melting furnaces.

Metallurgists know in detail the phenomena involved in the hardening of cast iron, which are based on the small difference, only 6°C, which can be seen from the Fe-C chart between the theoretical temperature of the stable eutectic (1,153°C) and the temperature of the metastable eutectic (1,147°C). Since in real conditions there is always undercooling, i.e. a transformation always occurs at a temperature that is lower than the theoretical or thermodynamic temperature, the need becomes evident, if one wishes to produce gray cast iron, to avoid exceeding the metastable eutectic threshold, beyond which one would enter the field of white cast iron.

The reasons for the delay occurring between thermodynamic predictions and kinetic behaviors, and therefore the reasons why undercooling occurs, are equally known issues. The growth of a new phase within the mother phase, for example the beginning of solidification in a liquid, implies the development of germs and the growth thereof beyond certain critical values in order to become nuclei of the developing phase. The lack or deficit of these nuclei slows down the evolutions of the system and accordingly a state of undercooling occurs. It is therefore possible to conclude that the extent of said undercooling is an indicator of the degree of nucleation of the mother phase.

In the specific case of the production of cast-iron castings, it has been demonstrated that undercooling also depends on the type of melting means: the electric induction or arc furnace causes a greater reduction in the degree of nucleation with respect to melting performed in a cupola furnace, and therefore the cast iron arriving from electric furnaces shows greater propensity to chill.

Inoculations, by introducing in the liquid cast iron agents that are capable of accelerating the development or increasing the numerical density of the stable nuclei, albeit endogenous in nature, have opened a new chapter that has high practical significance, allowing the metallurgist to have at his disposal a method that can be performed easily to control the adverse effects of excessive undercooling. However, it must be noted that experience, in accordance with the extensive literature on the issue, shows the limitations of these interventions, and particularly the fact that inoculants are effective over relatively short times, at the most always less than 20-30 minutes, and this is not always compatible with the requirements of production cycles: so-called late or in-die reactivations prove the onerous consequences linked to the fading of the inoculant effect.

Accordingly, our research considered, as its first parameter for analysis, the denucleation that characterizes the melting of cast iron in an electric induction furnace. Setting aside the examination of the already-known factors, for example the flotation of the possible nuclei during waiting times, or degradability traceable to overheatings of the bath, the question we posed was based on entirely new foundations, which can be ideally considered as being the examination of possible interference arising from the simultaneous presence of two phases that are very different in terms of constitution and morphology, namely the metal and the slag, both of which are subjected to the intense agitation of the bath, which is positive for interphase exchanges or heat uniformity, but at the same time causes perplexity regarding their full separation during periods at rest; the physical state assumed by the separated nonmetallic phase; and the consequences of an incomplete expulsion, or deslagging, of said nonmetallic phase. The complexity of arguing and demonstrating the assumption was evident from the outset, especially if one considers that the issue of slag continues to have a primary role in the various orientations of metallurgical research.

An example of the many considerations to which the matter lends itself can be summarized as follows: the agitation of the liquid bath in the furnace presumably causes more or less significant formations of metal-slag aggregates. The stabilization of these aggregates, however, is almost always interpreted as the interplay of surface or interface forces, ignoring any probability of intervention of chemical bonds and therefore of stronger interphase coupling. On the other hand, the success of modern ionic theories regarding the makeup of slag, which obviously prevail over classic molecular concepts, supports the application of these issues to the onset of chemical binding forces. It is evident that this might explain most of the practical impossibility of achieving a final bath that is almost free from nonmetallic fractions or slag.

Once it has been admitted that there are chemical binding reasons dispersed in the bath, it becomes logical to ask oneself whether these forces might also involve the nuclei, affecting their growth, or interfering in the processes of atomic diffusion towards said nuclei, or, even more importantly, whether these presences, which have their own electrical charge, cause or help to cause phenomena that in practice can be likened to a denucleation of the bath. Transferred to practical operation, this last circumstance would arise from a high increase in hardening which can be detected in the corresponding standard test pieces and can otherwise be expressed, under equal chemical and physical conditions, as a marked evanescence of the effects induced by the inoculant action.

As we agree with the concept that ionic structure theory is fully applicable to the nature of slag, we sought theoretical but experimentally demonstrable backing for the arguments described by way of example. In reading this research, however, one should not forget that cast irons are alloys the makeup whereof is always complex owing to the presence, next to iron and carbon, of many other chemical elements, such as silicon, manganese, sulfur, phosphor, chromium, copper, etcetera. The definition of metal-slag phase used so far must therefore be interpreted in its broadest meaning, since the paired terms can indicate either a combination of cast iron and slag or a phase in which one or more of the above alloying elements or compounds thereof replaces, even partially, the cast iron. One should also not forget the presences and influences of the gaseous components.

The silicon component, also in view of the extent of its presence, has always drawn particular attention, since it generates silica by oxidizing. This silica, by adding to the silica introduced by the gating and risers provided by the metal charge or arising from the erosion of the refractory, has a primary role and particularly affects the interactions with the basic oxides such as $FeO$, $MnO$, etcetera. The slag, in its most extreme simplification, can in fact be indicated as complex silicates $(MO)x\ (SiO_2)y$, where the term $(MO)$ designates the set of the various basic and/or amphoteric oxides combined with the silica; the characteristics and reactivity of said slag are almost always a function of the $(MO)/(SiO_2)$ ratio.

The dualistic formula $(MO)x(SiO_2)y$, by pointing out the acid function of the silica, would appear to be in contrast with ionic theories. Actually, there is no contradiction, since in castings the silica can absorb oxygen anions to form a tetrahedral silicate:

$$SiO_2 + 2O^{2-} = SiO_4^{\ 4-}$$

This process is fully similar, from the electrochemical point of view, to the formation of X anions on the part of a dissolved HX hydracid.

The tetravalent $SiO_4$ anion has been found as an independent entity both in glass silicates and in crystalline silicates, and the assumption that it also exists in the liquid state seems to be confirmed by the general behavior of molten silicates. Besides, further backing for this existence can be deduced from Pauling's work: the electronegativity difference between silicon and oxygen is 1.7. This value is equivalent to saying that the Si-O bond has an approximately 50% covalent character: this indeed justifies the above-mentioned stability of the $SiO_4$ anion. The picture is also fully compatible with the considerations that can be deduced from the small ionic radius (0.41 Å) and from the high charge (4+) of the silicon cation: in this electronic state, the cation is too polarizing to exist in isolated form and therefore its tendency to be surrounded with four oxygen anions, according to a tetrahedral coordination, is fully explainable.

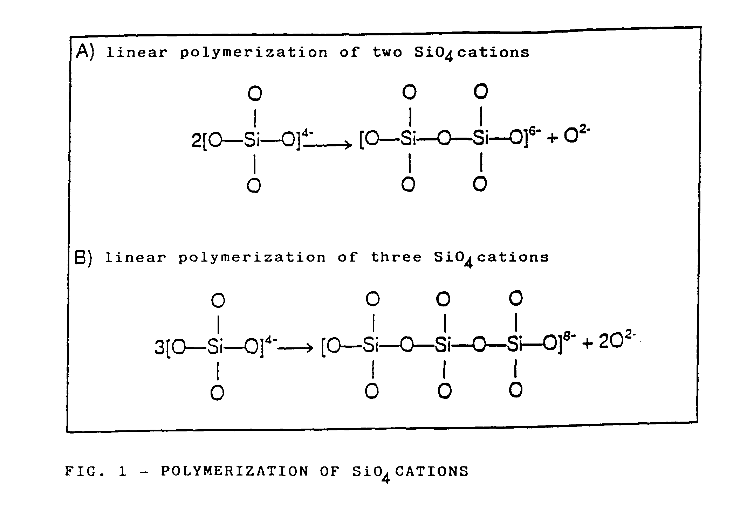

This coordination assumes that there is sufficient availability of oxygen anions to surround, in the described manner, all the involved silicon. If this availability does not occur, i.e., when there is an excess of silica, in order to find the oxygen anions it is necessary to admit the activation of a polymerization of the $SiO_4$ anions of the type shown schematically, in planar form, in figure 1.

This cooperation of the polymerizing mechanisms is equivalent to admitting a gradual size increase in the silicate phase, and this is backed by the parallel increase in the viscosity values.

Having determined that the $SiO_4$ anion can exist as a single entity, it becomes important that its formation cannot be ascribed exclusively to polymerizing patterns, also because according to the most straightforward logic this projection would ignore the overall electrical state of the system, i.e., the balance or imbalance between the cations, which carry positive charges, and the negative anions. Knowing the acid nature of silica, analysis must therefore be extended to the role of the MO basic oxide, for example according to the following equation:

$$2\ (MO) + SiO_2 = M_2SiO_4$$

which corresponds to the formation of the orthosilicate of the generic divalent metal M; this equation can be transcribed as a sum of the following passages:

$$2\ (MO) = 2\ M^{2+} + 2\ O^{2-}$$

$$2\ O^{2-} + SiO_2 = SiO_4^{\ 4-}$$

and as a whole

$$2M^{2+} + 2O^{2-} + SiO_2 = 2M^{2+}\ SiO_4^{\ 4-}$$

This substantially ionic expression demonstrates that apart from polymeric chains, the basic oxide MO can provide an evidently more direct contribution to the total of the oxygen anions required for the tetrahedral coordination of the silicon.

The likelihood that the oxide MO really intervenes in the described chemical phenomena depends first of all on the force of the bond between the metal M and the oxygen O in the molecule MO. The question can be easily answered by Pauling's work, already mentioned earlier, when considering the degree of ionicity of the bond as a first term of reference and in view of the electronegativity values assigned in the periodic table to each chemical element. As this degree increases, or rather as the percentage of ionic character of the bond between M and the oxygen increases, the tendency of MO to release oxygen anions increases. Once this position has been established, any further development is linked to the classic Coulomb's law, which notoriously concerns two electrical charges having opposite signs and placed at the distance d, and from which it is easy to deduce that the cation-oxygen attraction can be given in the following form:

$$F = 2z/d^2$$

where z is the valency of the cation.

To exemplify, in the case of the potassium oxide one obtains:

-- ionic radius of the K cation = 1.33 Å
-- ionic radius of the O anion = 1.40 Å
-- interionic distance d = 2.73 Å

from which:

$$d^2 = 7.453$$

and therefore:

$$F = 2z/d = 2/7.453 = 0.268$$

This is an undoubtedly low value which accordingly indicates a distinctly basic behavior, which implies a strong predisposition towards dissociation, introducing oxygen anions in the solution. This ability is widely used in the glass industry, where basic metal oxides are used as lattice modifiers.

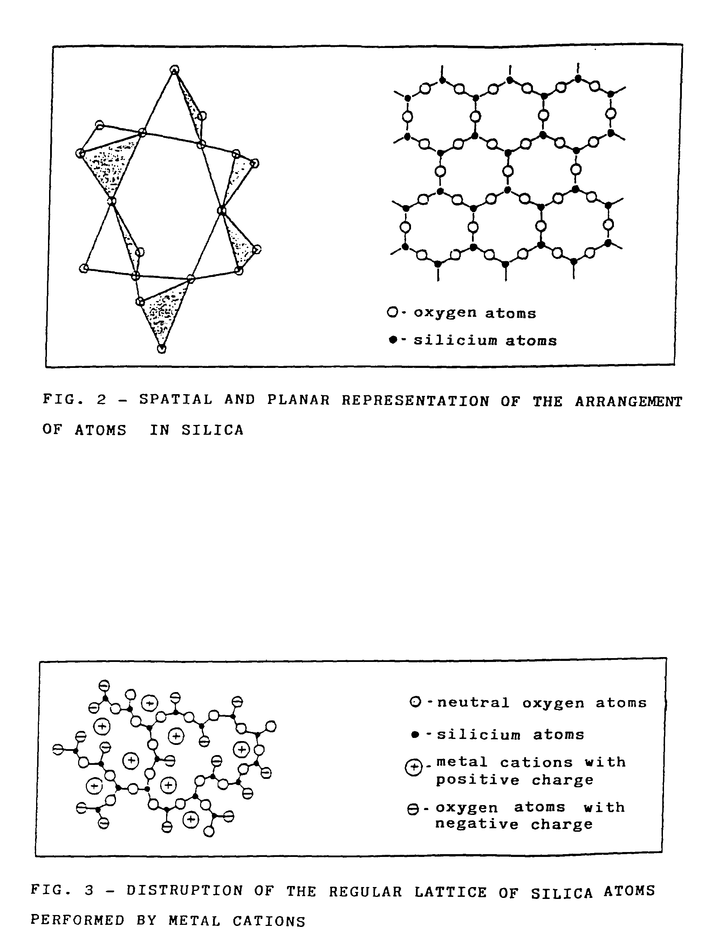

In the interest of the issues which we will deal with further on, we briefly summarize the action of these modifiers. Figure 2 shows a spatial representation of six tetrahedra, each whereof shares the oxygen atom at one vertex, whilst the silicon is at the center of said tetrahedron. This arrangement can be simplified with a planar diagram and therefore for silica, as shown in the same figure, a repetitive and orderly lattice is obtained. The melting of said silica with a highly basic metal oxide disrupts this order and generates chains in which, as in figure 3, not all the oxygen atoms are saturated and the unpaired electrons negatively charge the unsaturated atom: stabilization of the system is achieved through the presence of positive metal ions. In any case, it is important to note that the oxygen-silicon atomic ratio, which is 2:1 in silica, reaches higher values in systems produced by silicon + metal oxide melting operations. In an extreme case, if the oxide were present in an amount sufficient to raise said ratio to 4:1, all the tetrahedral groups of the silica would be separated. At this point we have outlined a situation which, in its various merging points, lends itself to the following summary: in the ionic view related to the structure of slag, the $SiO_4$ anion has been found as a free entity: likewise, the attribution of an acid character to the silica seems to be fully compatible with said ionic theory. An excess of silica entails that the system must seek the missing oxygen ions, which can come from the occurrence of polymerizations among the silicate anions or from the intervention of metal oxides or from both sources. In any case, the role of the oxide is certainly significant, and its functionality implies that the metal-oxygen bond has a high ionic character percentage and therefore limited resistance to the involved melting temperatures; likewise, the attraction force F between the positive metal cations and the oxygen ions must be low: a low value of F indicates strong basicity of the oxide. Applying all this to practical considerations, one can confidently say that many properties of silicates match and confirm the described conclusions. Limiting ourselves to a single example, in binary silicate melting, the work of M.Rey demonstrates that the solubility of oxides in silica clearly varies according to the force F: for monovalent alkaline elements of the first group, solubility increases as the atomic number increases, and this behavior is similar to that of divalent alkaline earth elements.

Before applying the concepts of the above completed summary to foundry practice, it seems logical to consider, in view of the described role of silica, all the causes that can lead to silica additions to the bath. These causes have various origins, and some of them, which have in any case already been mentioned, already occur when the solid metal charge is introduced in the furnace. It is beyond doubt that this operation subjects the refractory lining of the crucible to mechanical stresses, be they impacts or abrasions, increasing the likelihood of entraining siliceous material in the charge. It is also true that in calculating the iron charge one usually considers the so-called gating and risers, i.e., the material recycled from the scrap of previous castings, which is almost always impregnated with sand residues. In usual terminology, these involuntary additions of silica, like other presences that cause intentional additions, for example those that can be ascribed to the ash of the coke fuel, are considered as the origin of so-called secondary slag.

However, the main source of silica is primary slag, i.e., the complex nonferrous mass resulting from oxidation processes and from metal-refractory and/or atmosphere-slag-metal relationships. In the most extreme simplification, i.e., assuming that there are no alloying elements and ignoring secondary ones, the main components of a normal cast iron are iron, manganese, silicon and carbon. During melting, the first three elements remain exposed to oxidation the most, whereas carbon, at the highest temperatures, acts as a reducing agent, reducing the final content of manganous and ferrous oxide, but is scarcely active with respect to the silica. The reduction of said silica is kinetically less favored with respect to FeO and MnO, and therefore in the sum of primary and secondary slag said silica is found to be the predominant oxide.

In evaluating the evolutions and consequences of this siliceous slag, which as a whole is constituted, after the chosen simplification, by silica-ferrous oxide-manganous oxide, an initial help is provided by the $SiO_2$-FeO state chart. Its plot allows to conclude that silica-rich slag, approximately over 40% of $SiO_2$, will be glassy and will have a good consistency even at high temperatures. However, as the FeO content rises, their melting point drops considerably, and therefore the corresponding fluidity increases. The additional presence of the manganous oxide, i.e., the extension of the examination to the $SiO_2$-FeO-MnO triplet, does not alter the above deductions, since the possibility of encountering fluid slag remains high.

The treacherousness of fluid slag is well-known to any foundryman: it is invisible both in the furnace and in the ladle and it is entrained by the cast iron even into the die, almost always producing defective castings due to inclusions or gas developments occurring during hardening. The basic reason is substantially the poor tendency of this slag to float towards the surface of the bath, where they could be blocked with current deslagging coagulants.

A low rate of ascent of these nonmetallic liquid phases dispersed in the cast iron can reasonably be ascribed to their limited propensity to expand, by coalescence or by any other mechanism, and thus to acquire, according to Stokes' law, a greater thrust towards the surface of the bath. However, this inability is in obvious contrast with other behaviors that are currently used in metallurgical practice, such as for example mixed deoxidations with Si-Mn indeed to obtain, as a product of the reactions, slag that is fluid and as such, as predicted by Stokes, easy to float. In view of such a divergence, logic leads to claim that factors other than those usually considered must be involved or at least prevail in the case of the fluid slag of cast iron.

Our observations on the issue were based on the description of the ionic nature of the structure of the slag; the role of silica and metal oxides; the influence of the character of the chemical bonds, and more generally the entire set of notions already presented on the subject.

Having seen that the slag involved, despite being liquid and therefore theoretically predisposed to coalesce, actually does not achieve such conglomerations as to follow Stokes' law, the need arises to detect any possible interference, or overlap of effects, leading to such an abnormal behavior.

Within the scope of this research, and indeed because we were convinced that the true causes of the anomaly could lie beyond the confines of a conventional analysis of the issue, our questions were directed towards the possible interventions of ionic charges, or of phenomena that could be linked thereto.

As we have seen, the silica structure can be disrupted until one obtains an amorphous state, i.e., a set of more or less distorted and accordingly more or less stable lattices, in which there are both ions with a negative charge and cations with their positive charge. We have also found that the basis of these disruptive mechanisms is constituted, to a decisive extent, by the ionic character of the metal-oxygen bond, and we concluded that the ferrous and manganous oxide, in such a framework, cannot express significant activity or incidences. Accordingly, the formation and evolution of the fluid slag in the metal bath pose questions verification whereof must match practical findings but at the same time must also be compatible with the deductions that can be made from modern chemical-physical study of molecular structure.

Practice confirms that fluid slag, earlier termed invisible but aggressive, already occurs at relatively low temperatures, and in our opinion as a consequence of a direct interaction between the silica and the ferrous oxide, or of the pair constituted by ferrous oxide and manganous oxide, all of which originate from oxidation of the bath, and which react with each other according to a solubilization pattern. This argument being accepted, it is also possible to outline the reasons that do not allow coalescence of the reacted substances, which are low-boiling and extremely fluid: the movements of the bath entail rather intense dispersion of the slag particles, which can remain in the liquid cast iron as included phases by means of the onset of a situation that is close to emulsification.

Differently from fluid slag, more consistent siliceous masses float to the surface and form a covering that is in continuous contact with the metal bath. The lower surface of this covering, i.e., the slag/cast iron interphase area, is thus exposed to the higher temperature, in practice the temperature of the liquid, in addition to being constantly wet by the moving liquid metal. In such a situation, even if we were to formulate the most ideal possible conditions, i.e., if we were to assume that all the nonmetallic fractions except those indicated as fluid slag have floated to the surface, it is evident that said interphase area becomes the seat of a gradual loosening of consistency and therefore becomes the source of lattices which are less important but can be easily entrained inside the metal mass. However, thinning of the lattice could lead to a greater corrodibility on the part of the ferrous oxide, or at least to the requirement, even with a motionless bath, of excessively long flotation times with respect to those compatible with the requirements of production cycles.

In the evident complexity of the many overlaps that can be deduced from what has been described, the object of the invention is to provide a shop method capable of activating the mechanisms suggested by the notions provided by the study of molecular structures, maintaining the assumption that these mechanisms must be able to proceed automatically, with easy interventions or additions, until such constitutional or morphological modifications of the slag are achieved as to lead to a final liquid cast iron that is thoroughly purified or at least as free as possible from inclusions of nonmetallic phases.

This object, and others that will become apparent hereinafter are achieved by a method for producing grey cast iron by treating, in the liquid state, cast iron produced in an electric furnace, characterized in that such cast iron is treated by means of a method according to claim 1 in order to produce grey cast iron.

Further characteristics and advantages of the invention will become apparent from the description of a preferred embodiment of the method according to the invention which is illustrated only by way of non-limitative examples in the accompanying figures, wherein:

figure 1 is a schematical representation of the polymerization of $_{SiO}4$ cations, in planar form;
figure 2 is a spatial and planar representation of the arrangement of atoms in silica;
figure 3 is a schematic representation of the disruption of the regular lattice of silica performed by metal cations;
figure 4 is a chart showing the effect of preconditioning on the hardening height and evolution thereof over time;
figure 5 is a chart showing a comparison of evanescence times of the inoculation treatment with respect to preconditioning;
figure 6 is a chart showing the effect of preconditioning on first casting, after the night break, of cast iron meant for thicker castings;
figure 7 is a micrographic representation of a non-preconditioned cast iron inoculated in a ladle, in a manual casting;
figure 8 is a micrographic representation of a non-preconditioned cast iron inoculated in a ladle, with reactivation in the die, in an automatic casting;
figure 9 is a micrographic representation of a preconditioned cast iron with single inoculation in the die, in an automatic casting;
figure 10 is a table with data for a comparison of mechanical characteristics;
figure 11 is a table with mechanical machinability characteristics of a non-preconditioned cast iron inoculated in the ladle with reactivation in the die, in an automatic casting;
figure 12 is a table with mechanical machinability characteristics of a preconditioned cast iron with reactivation in the die, in an automatic casting;

With reference to the figures, assays undertaken for the purpose stated above confirmed from the start the theoretical predictions regarding the role of the type of metal-oxygen link. The intervention of an oxide with a strong ionic character, as we were able to find out, allows to act simultaneously on various parameters: to provide the availability of the oxygen anions required to prevent self-polymerization of the silica; to choose a large-volume metal cation in order to increase the instability of the distorted chemical bonds; to destabilize, as occurs by adding electrolytes to an emulsion, the quasi-emulsion state that we surmised to explain the persistence of the fluid slag in the bath; to link the selected metal to the scale of oxide formation free energies, and thus utilize the thermodynamic possibilities. Barium, for example, is in a group of chemical elements that meet these initial requirements: the bond of its oxide, according to Pauling, has a degree of ionicity of 82%; the radius of its ion is large (1.35 Å); the Elligham free energy diagram indicates it as a strong deoxidizing agent. In view of these particularities, we chose barium to set up a first orientative assay stage. In an electric crucible furnace having an acid lining, with a capacity of 28 tons of liquid metal, currently used to produce gray cast iron with the following typical analysis:

$$\%C = 3.30\text{-}3.35 \qquad \%Si = 1.75\text{-}1.80$$

$$\%Mn = 0.50\text{-}0.55 \qquad \%S = 0.05\text{-}0.06$$

once the temperature considered to be optimum had been reached, the foundry performed the following procedure: the bath was stilled and kept at rest for approximately ten minutes; crude granulated perlite was spread on the slag mass to facilitate deslagging; all the clotted material that floated on the free surface of the liquid was accurately removed; the conditions of the cast iron were checked to ensure that they were within the standardized limits for thermal analysis and for the hardening test piece; and tapping was started. The average hardening value, measured from a triangular test piece cast into a sand-resin agglomerated mold of 12-14 mm, was far above the standard limit and was therefore a justified reason to produce return to normality by massive resort to inoculation, despite being aware of the risks arising from overinoculation states.

During this first set of experiments, we modified this operating pattern as follows: after deslagging and purifying the metal with the aid of perlite, the movement of the cast iron in the furnace was resumed, while adding barium equal to three-four gram atoms of element per ton, in the form of Ba ferro-alloy. After intensifying the movements of the liquid, at maximum power, for five to six minutes, the bath was stilled and kept still for no less than ten minutes. Despite the initial purified state, provided according to the conventional above-described procedure, at the end of the additional operations that we had introduced it was truly surprising to observe the extent of the slag further expelled from the bath. This observation, which was also confirmed when the type of solid charge or the melting rate varied, could only be interpreted as a first and tangible confirmation of our initial hypotheses.

Another surprising fact was the alternating behavior of hardening, which after the described treatment often showed considerable reductions, such as to reduce the extent of subsequent inoculant additions. The issue, which was too significant to be set aside, suggested to consider gaseous contents as well, and particularly the possible interference of the free oxygen present in the bath.

Oxygen, a diatomic gas, according to Sievert's law dissolves in liquid cast iron in the monatomic and electrically neutral state even if theory allows, during atmosphere-slag-metal exchanges, a transient passage with the cooperation of the oxygen ion, which is immediately neutralized by compensatory transformations. In this electrically neutral state, the free oxygen cannot be included in the developed ionic pattern; however, knowing the oscillations of the rate at which it can be present, a check of its activity in the metal seemed to be sensible. The field of operations was therefore extended with the aim of matching this profile as well and, as a whole, of performing the following functions: leveling the free oxygen content in the bath and simultaneously providing said bath, by means of the MO oxide, the oxygen ions required to coordinate the silicon, thus ruling out the necessity of the polymerizing developments of the silica.

Starting from these assumptions, and in obvious harmony with the standard oxide-formation free energy scale, we formulated a correcting agent, hereinafter termed "preconditioner", in which barium experimentally matched our theoretical predictions. The quality of the results obtained with the above-described barium complementation, and particularly the reproducibility of these results, were the reason for extending use of the correcting agent to the entire production of the foundry.

This extension, by affecting all of the gray cast irons, otherwise known as lamellar graphite cast irons, involved five electric furnaces with a capacity of 28 tons each, of the crucible type and with acid lining, the entire system being equivalent to an average production of 180 tons of liquid over 24 hours. In view of the different types of casting, a wider analytical range than the first experiments was furthermore involved, namely:

| | | |
|---|---|---|
| C = 3.35-3.45% | Si = 1.40-1.75% | Mn = 0.40-0.80% |
| Ni = 0.05-0.20% | Cr = 0.05-0.15% | Sn = 0.01-0.06% |
| S = 0.02-0.04% | P = 0.02-0.03% | Cu = 0.01-0.65% |

Having confirmed the validity of the changes made to the old casting practice of the foundry, which have been already described, the experience accumulated in the meantime allowed to determine the range of 1,385-1,410°C as being the ideal interval for the addition of the correcting agent or conditioner. Accordingly, the melting program of the five furnaces, while respecting the sequence of the above-mentioned modifications, was standardized as follows: once the temperature of 1,385-1,410°C was reached, and after careful deslagging of the bath, 0.30-0.40% by weight of correcting agent was added to said bath, subsequently moving on to the step that provided operation at the maximum possible power, followed by the remaining operations required by our modified pattern.

It can be seen that this process, hereinafter referenced to as cast iron "preconditioning" treatment, in addition to being standardizable, is very easy, and its effectiveness can also be easily checked and reactivated if necessary through the assessment of the hardening test piece.

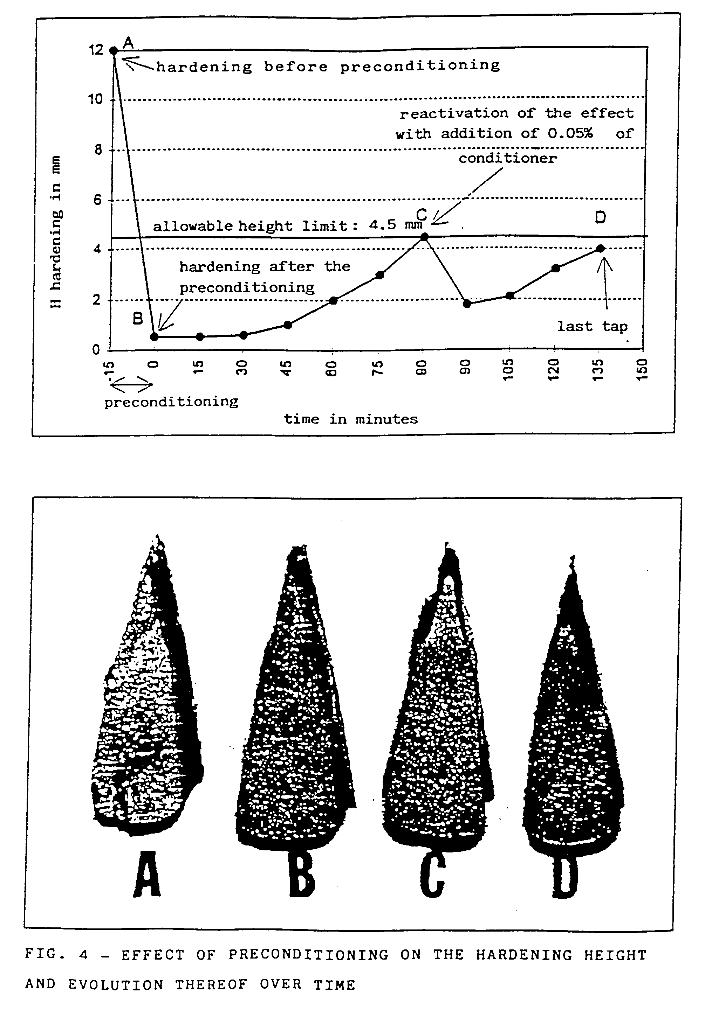

The results that we will now describe summarize the conclusions confirmed by over one thousand castings, i.e., by the preconditioning of over 28,000 tons of liquid cast iron. The chart of figure 4 plots the evolution of hardening after preconditioning and its variation over time. Since the foundry standard prescribed a maximum height of 4.5 mm, hardening measured from the triangular test piece (60 mm height, 22 mm base), the reduction linked to the preconditioning action is highly significant. From point A, which is equal to 12 mm and corresponds to the cast iron before treatment, the hardening height drops to 0.5 mm at point B.

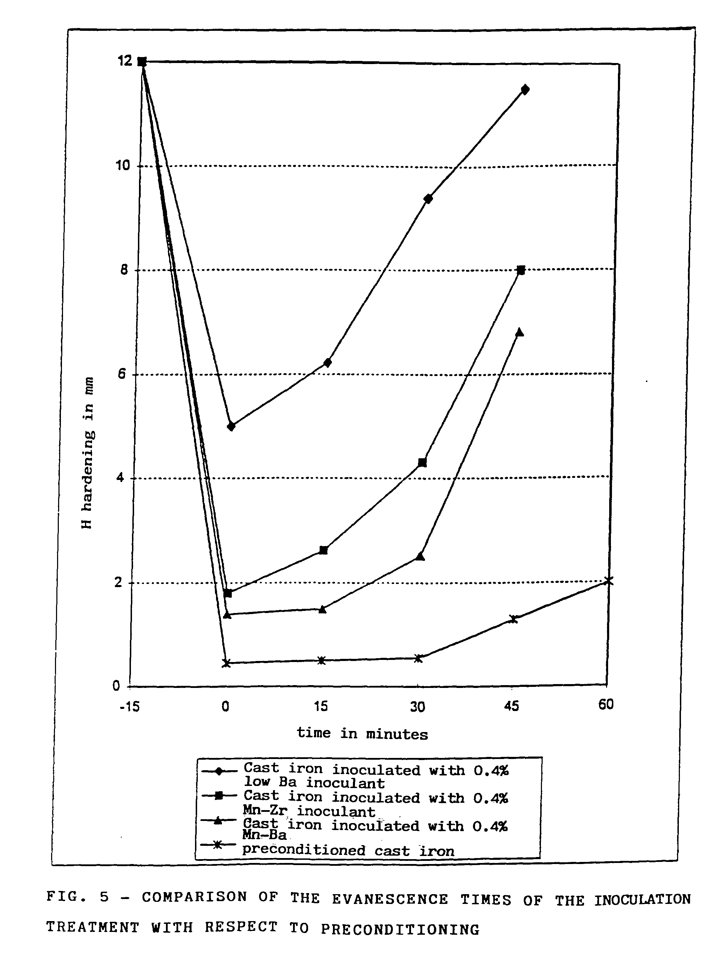

Taking this as time zero, its long permanence below the acceptable limit is also highly significant and is an entirely new fact, as can be deduced from figure 5, with respect to the short fading times that are typical of inoculants. It is also important to stress the possibility of reactivating the preconditioning mechanisms: at point C, the metal reaches the maximum acceptable hardening value. A reduced addition of 0.05% of correcting agent to the cast iron still to be tapped returns the metal to the normal range.

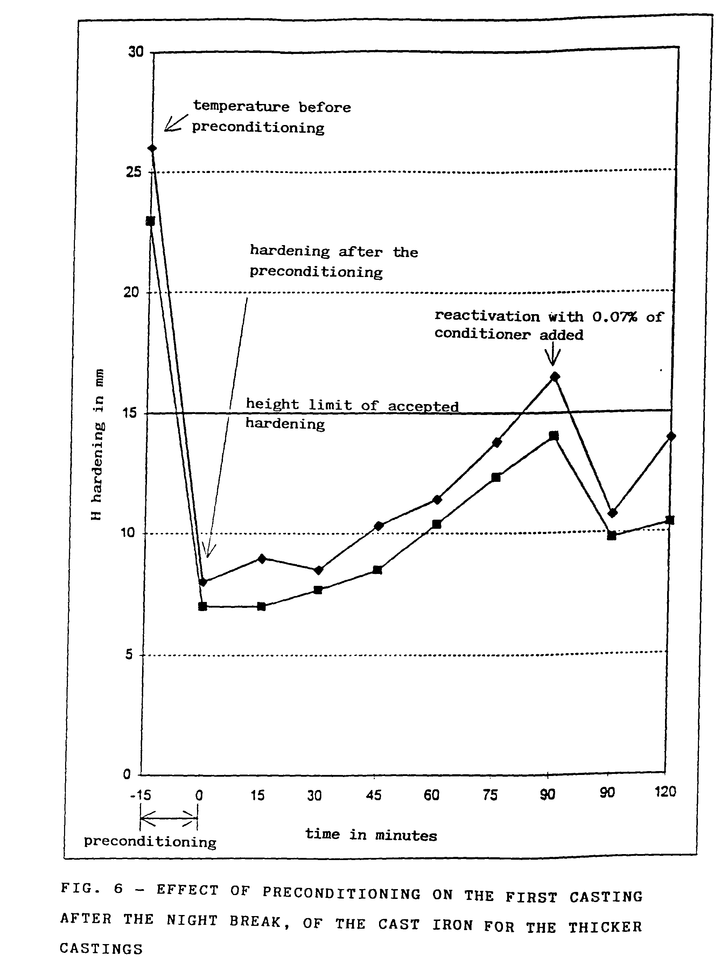

Since it is known that leaving the bath in standby entails denucleation, with consequent unpredictable increases in hardening and therefore in the tendency of the cast iron to chill due to excessive undercooling, in order to demonstrate the validity and flexibility of the preconditioning practice, we applied said practice to the first casting of the daily program, i.e., to a bath placed in said standby for at least ten-twelve hours, charting the corresponding results separately. Figure 6, by pointing out a limited range of observed oscillations, provides a positive answer to the question. Two substantial confirmations arise from what has been stated so far: the possibility of reaching a low inclusion state of the liquid cast iron, in other words, in-depth elimination of the nonmetallic fractions or slag from the bath; a parallel finding of a reduction in hardening which, in accordance with what has been described, is equivalent to admitting a reduction in denucleating factors. These confirmations, if converted into practical terms, are the basis for the process that has allowed to overcome the difficulties posed by automation of foundry systems, presented in their various profiles in the introductory part of the description. Our extended research has in fact demonstrated that preconditioning of the cast iron, if performed correctly, ensures the achievement of the following goals:

1) reduction of inoculations: apart from the economic effects or from the danger of incurring in microscopic shrinkholes caused by overinoculation, the method according to the invention was in obvious contrast with the acquired and confirmed findings concerning the permanence over time of a high degree of nucleation of the cast iron. In searching for a verification which matched the ascertained facts but was aimed at better delimiting the limits of a self-generation of the nuclei, and after defining an increase in non-destructive tests on the produced castings, said inoculation in the ladle was fully eliminated, without finding drawbacks even during the mechanical machining of the castings. The reactivation intervention on the stream was also eliminated in a second stage, maintaining inoculation in the die as the only reactivation.

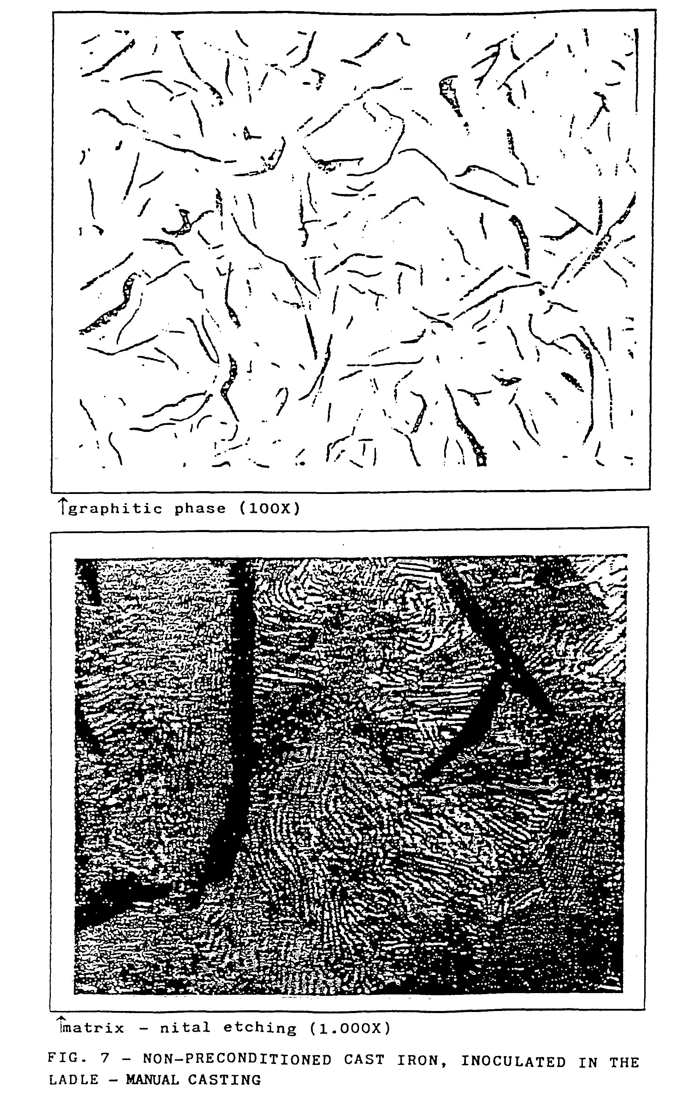

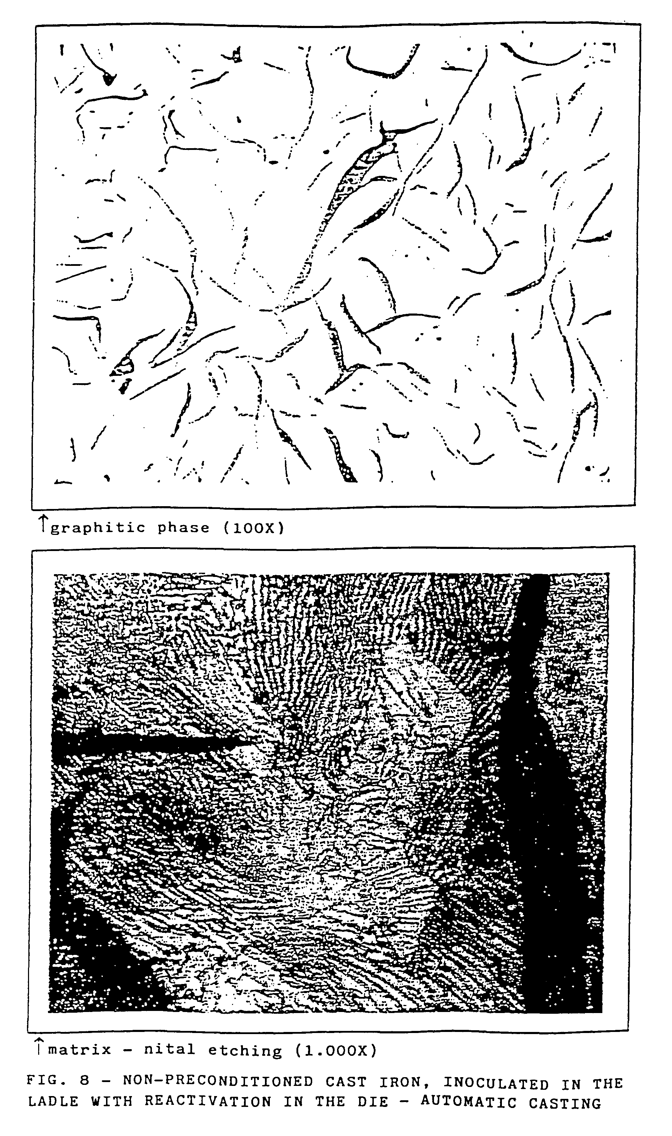

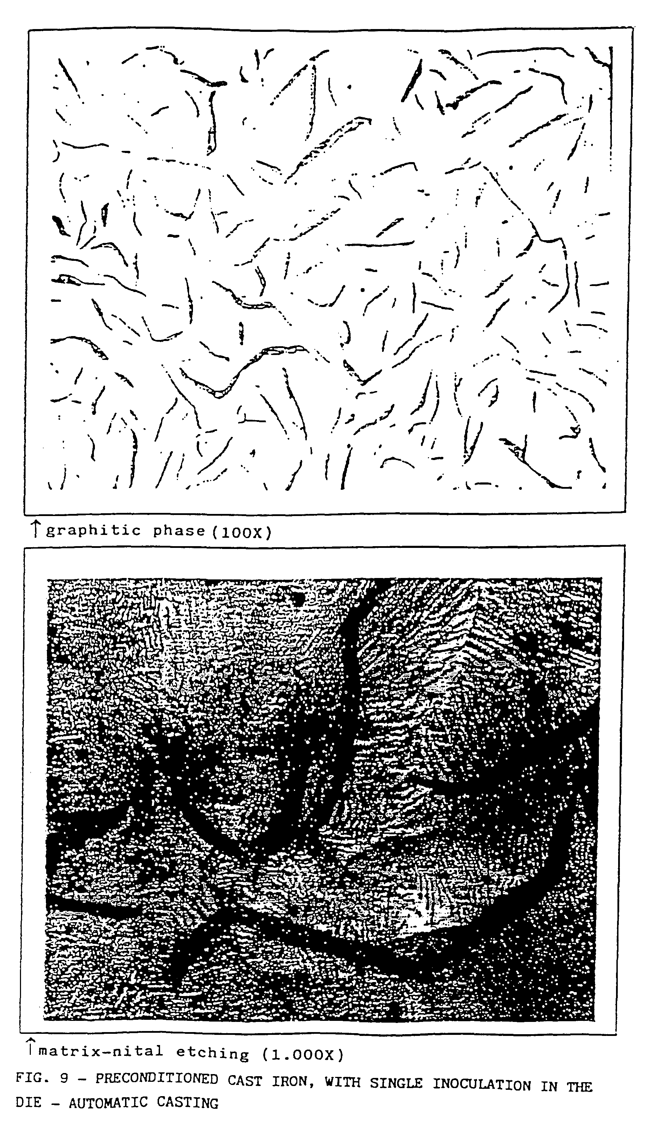

The micrographic findings shown in figures 7, 8, and 9 leave no room for doubt as to the validity of the preconditioning treatment; they correspond respectively to cast iron that is not preconditioned but inoculated in the ladle and hand-cast; to cast iron that is not preconditioned but inoculated in the ladle, cast with an automatic furnace, and inoculated in the die; and to cast iron that is preconditioned and inoculated exclusively in the die;

2) full elimination of all drawbacks related to slag, which as a whole limit the functionality of the casting furnace. The involved factors, including the duration of the plug sleeve, remain within the normal range, thus removing the alternations of the cycle. Application to obtain higher productivity and eliminate rejects caused by abnormal casting is straightforward;

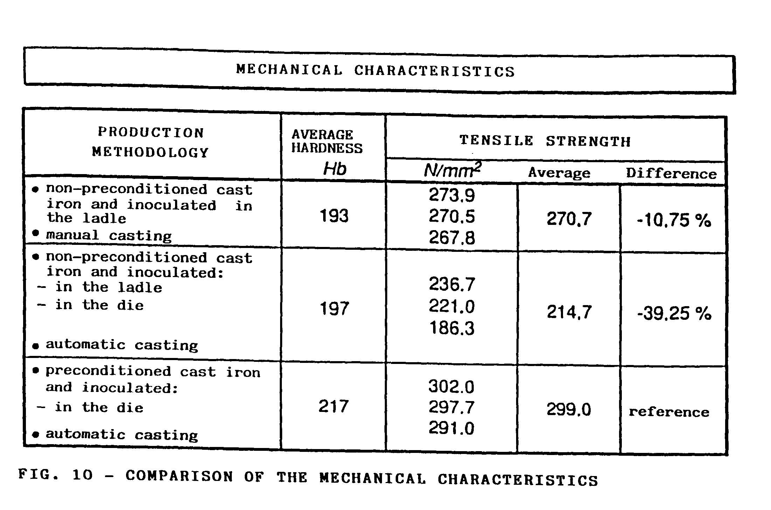

3) quality stabilization and reproducibility. The micrographic data that have already been presented allow to assess how the mentioned reduction in inoculants, leaving aside any economical consideration, has not compromised the quality of the product; on the contrary, due to the lower influence of evanescence times, the quality level is enhanced also from the point of view of its reproducibility. Stabilization of the mechanical characteristics in the intended and/or prescribed limits is a consequence. In this regard, reference is made to the table of figure 10: comparison of these mechanical characteristics shows that cast iron preconditioning leads to increases in tensile strength by up to approximately 40% with respect to those obtainable with current methods, assuming analytical comparability;

4) greater machinability of the castings. The measurements for evaluating machinability were performed on a safety part casting (brake drum), which was taken as reference because of its representative nature, also in view of the strict testing prescriptions. Comparison of the following data sheets:

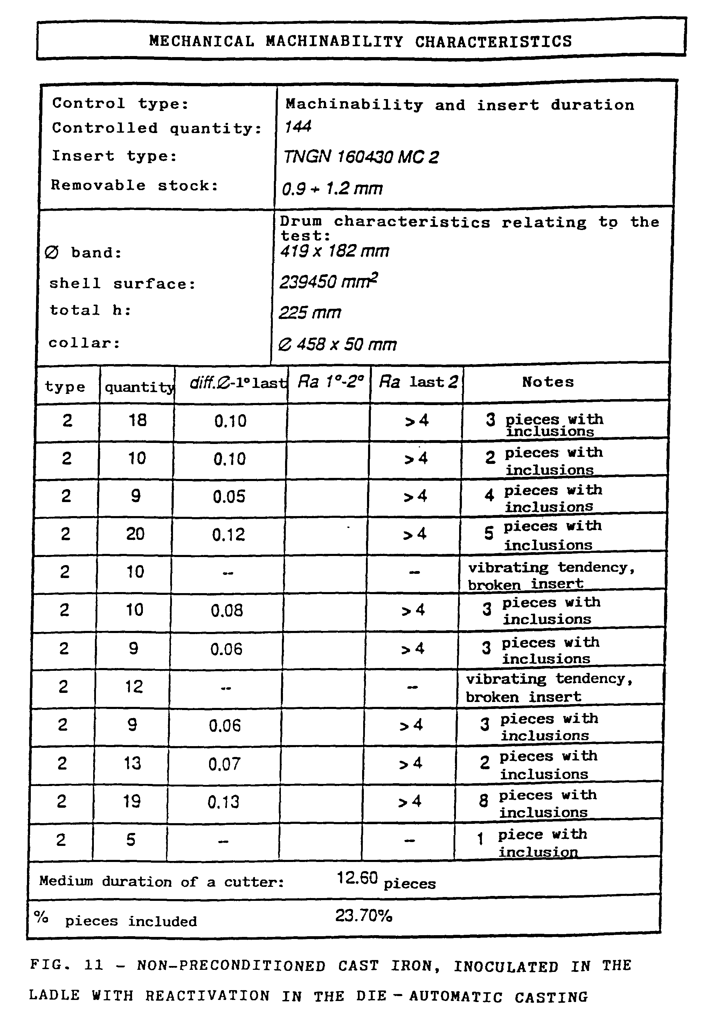

-- in figure 11: related to cast iron that is not preconditioned and is inoculated in the ladle with reactivation in the die; automatic casting;

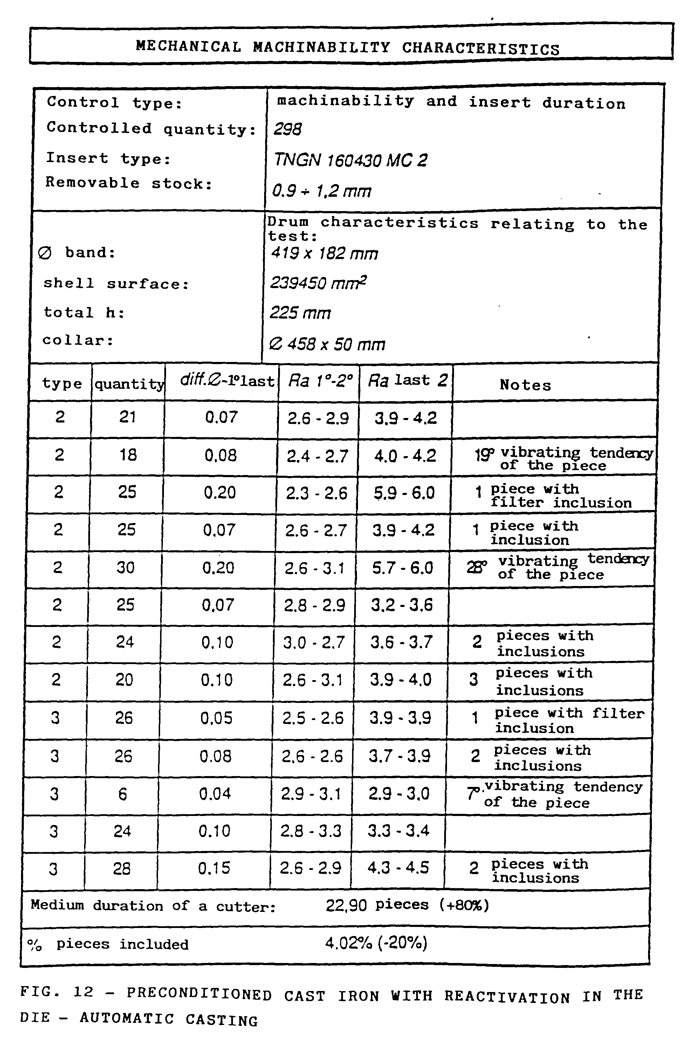

-- in figure 12: related to preconditioned cast iron inoculated in the die and with automatic casting;

points out the advantages of preconditioning: the average life of a cutting edge increases by over 80%; rejects due to hidden defects that become manifest after machining drops by approximately 20%, and all this is achieved despite strength and hardness values that are higher than the minimum values prescribed by the tables.

Having firmly established the compliance of the preconditioning operation, a possible question that we must rule out relates to possible significant analytical variations entailed by the correcting agent or conditioner: its silicon addition, for example, and when used as a vehicle, remains within the margin of 0.03-0.06%, which is not relevant to the global evaluations. We must furthermore note that preconditioning cannot be likened or compared to a pre-inoculation of the liquid cast iron: our experience in this regard has in fact proved itself far from the intended goal. Finally, in order to complete the work, the question is posed of finding an exhaustive explanation to the prolongation, to an extent hitherto unobserved, of such a resistant state of nucleation of the cast iron. Our hypotheses, by orientating themselves towards possible cyclic onsets that generate nuclei, are close to the theoretical speculations and to the experimental conclusions that have already been accepted by the literature, such as: the role of beta cristobalite, which is stable at the temperatures involved, and is found in the nuclei; the fact that said beta cristobalite can be formed continuously, albeit gradually due to the lack of free oxygen, by the catalytic action of the metal cation M on the amorphous silica produced by the oxidation of the silicon; the probable effects of the degree of purity of the bath, viewing inclusions as possible barriers that hinder the processes for the diffusion of the carbon and of the other components.

## Claims

1. Method for producing grey cast iron by treating, in the liquid state, cast iron in an electric furnace comprising the following steps:

   a) before pouring from the electric furnace, adding a correcting agent to the molten bath in the electric furnace, which agent contains 3-4 gram atoms of barium per ton of cast iron, the said agent being in the form of a ferro alloy, and
   b) intensifying the movement of said bath, so that metallic inclusions and/or slag, otherwise difficult to remove because of their poor floatability, are eliminated from said bath, at the same time increasing the duration of the nucleation state of the cast iron.

2. Method according to claim 1, wherein a reactivation treatment is carried out after adding said correcting agent by adding a further amount of 0.05% of said correcting agent to the cast iron still to be poured from the electric furnace.

## Patentansprüche

1. Verfahren zur Herstellung von grauem Gusseisen durch Behandlung des Gusseisens in dem flüssigen Zustand in einem elektrischen Ofen, umfassend die folgenden Schritte:

   a) vor einem Ausgießen aus dem elektrischen Ofen, Hinzufügen eines Korrekturmediums zu dem geschmolzenen Bad in dem elektrischen Ofen, welches Medium 3 bis 4 Grammatome Barium pro Tonne Gusseisen enthält, wobei das Medium in der Form einer Eisenlegierung ist, und

   b) Verstärken der Bewegung in dem Bad, sodass metallische Einschlüsse und/oder Schlacke, die wegen ihrer schlechten Schwimmfähigkeit sonst schwierig zu entfernen sind, aus dem Bad ausgeschieden werden, wobei zugleich die Beständigkeit des Keimbildungszustandes des Gusseisens gesteigert wird.

2. Verfahren nach Anspruch 1, wobei eine Reaktivierungs-Behandlung nach Hinzufügen des Korrekturmediums durch Hinzufügen einer weiteren Menge von 0,05% des Korrekturmediums zu dem noch aus dem elektrischen Ofen auszugießenden Gusseisen durchgeführt wird.

## Revendications

1. Procédé de production de fonte grise par traitement, à l'état liquide, de la fonte dans un four électrique, comprenant les étapes suivantes :

   a) avant de le verser du four électrique, ajouter un agent correcteur au bain en fusion dans le four électrique, lequel agent contient 3-4 atomes-grammes de baryum par tonne de fonte, ledit agent étant sous forme d'un ferro-alliage, et
   b) intensifier le mouvement dudit bain, de telle sorte que les inclusions métalliques et/ou le laitier, difficiles sinon à éliminer en raison de leur mauvaise flottabilité, sont éliminés dudit bain, augmentant en même temps la durée de l'état de germination de la fonte.

2. Procédé selon la revendication 1, dans lequel un traitement de réactivation est réalisé après l'addition dudit agent correcteur, par addition d'une quantité supplémentaire de 0,05% dudit agent correcteur à la fonte restant à verser du four électrique.

A) linear polymerization of two $SiO_4$ cations

$$2[O{-}Si{-}O]^{4-} \longrightarrow [O{-}Si{-}O{-}Si{-}O]^{6-} + O^{2-}$$

B) linear polymerization of three $SiO_4$ cations

$$3[O{-}Si{-}O]^{4-} \longrightarrow [O{-}Si{-}O{-}Si{-}O{-}Si{-}O]^{8-} + 2O^{2-}$$

FIG. 1 — POLYMERIZATION OF $SiO_4$ CATIONS

O · oxygen atoms

● · silicium atoms

FIG. 2 – SPATIAL AND PLANAR REPRESENTATION OF THE ARRANGEMENT OF ATOMS IN SILICA

O · neutral oxygen atoms

● · silicium atoms

⊕ · metal cations with positive charge

⊖ · oxygen atoms with negative charge

FIG. 3 – DISTRUPTION OF THE REGULAR LATTICE OF SILICA ATOMS PERFORMED BY METAL CATIONS

FIG. 4 – EFFECT OF PRECONDITIONING ON THE HARDENING HEIGHT
AND EVOLUTION THEREOF OVER TIME

FIG. 5 - COMPARISON OF THE EVANESCENCE TIMES OF THE INOCULATION TREATMENT WITH RESPECT TO PRECONDITIONING

FIG. 6 - EFFECT OF PRECONDITIONING ON THE FIRST CASTING AFTER THE NIGHT BREAK, OF THE CAST IRON FOR THE THICKER CASTINGS

↑graphitic phase (100X)

↑matrix - nital etching (1.000X)

FIG. 7 - NON-PRECONDITIONED CAST IRON, INOCULATED IN THE LADLE - MANUAL CASTING

↑graphitic phase (100X)

↑matrix - nital etching (1.000X)

FIG. 8 - NON-PRECONDITIONED CAST IRON, INOCULATED IN THE
LADLE WITH REACTIVATION IN THE DIE - AUTOMATIC CASTING

↑ graphitic phase (100X)

↑ matrix-nital etching (1.000X)

FIG. 9 – PRECONDITIONED CAST IRON, WITH SINGLE INOCULATION IN THE DIE – AUTOMATIC CASTING

| MECHANICAL CHARACTERISTICS | | | |
|---|---|---|---|

| PRODUCTION METHODOLOGY | AVERAGE HARDNESS *Hb* | TENSILE STRENGTH | | |
|---|---|---|---|---|
| | | *N/mm²* | Average | Difference |
| • non-preconditioned cast iron and inoculated in the ladle<br>• manual casting | 193 | 273.9<br>270.5<br>267.8 | 270.7 | -10.75 % |
| • non-preconditioned cast iron and inoculated:<br>− in the ladle<br>− in the die<br><br>• automatic casting | 197 | 236.7<br>221.0<br>186.3 | 214.7 | -39.25 % |
| • preconditioned cast iron and inoculated:<br>− in the die<br><br>• automatic casting | 217 | 302.0<br>297.7<br>291.0 | 299.0 | reference |

FIG. 10 − COMPARISON OF THE MECHANICAL CHARACTERISTICS

EP 0 805 216 B1

## MECHANICAL MACHINABILITY CHARACTERISTICS

| Control type: | Machinability and insert duration |
| Controlled quantity: | 144 |
| Insert type: | TNGN 160430 MC 2 |
| Removable stock: | 0.9 ÷ 1.2 mm |

| | Drum characteristics relating to the test: |
| Ø band: | 419 x 182 mm |
| shell surface: | 239450 mm$^2$ |
| total h: | 225 mm |
| collar: | ∅ 458 x 50 mm |

| type | quantity | diff.∅-1° last | Ra 1°-2° | Ra last 2 | Notes |
|------|----------|----------------|----------|-----------|-------|
| 2 | 18 | 0.10 | | >4 | 3 pieces with inclusions |
| 2 | 10 | 0.10 | | >4 | 2 pieces with inclusions |
| 2 | 9 | 0.05 | | >4 | 4 pieces with inclusions |
| 2 | 20 | 0.12 | . | >4 | 5 pieces with inclusions |
| 2 | 10 | -- | | -- | vibrating tendency, broken insert |
| 2 | 10 | 0.08 | | >4 | 3 pieces with inclusions |
| 2 | 9 | 0.06 | | >4 | 3 pieces with inclusions |
| 2 | 12 | -- | | -- | vibrating tendency, broken insert |
| 2 | 9 | 0.06 | | >4 | 3 pieces with inclusions |
| 2 | 13 | 0.07 | | >4 | 2 pieces with inclusions |
| 2 | 19 | 0.13 | | >4 | 8 pieces with inclusions |
| 2 | 5 | -- | | -- | 1 piece with inclusion |

| Medium duration of a cutter: | 12.60 pieces |
| % pieces included | 23.70% |

FIG. 11 – NON-PRECONDITIONED CAST IRON, INOCULATED IN THE LADLE WITH REACTIVATION IN THE DIE – AUTOMATIC CASTING

| MECHANICAL MACHINABILITY CHARACTERISTICS |
|---|

| Control type: | machinability and insert duration |
|---|---|
| Controlled quantity: | 298 |
| Insert type: | TNGN 160430 MC 2 |
| Removable stock: | 0.9 ÷ 1,2 mm |

| | Drum characteristics relating to the test: |
|---|---|
| ∅ band: | 419 x 182 mm |
| shell surface: | 239450 mm$^2$ |
| total h: | 225 mm |
| collar: | ∅ 458 x 50 mm |

| type | quantity | diff.∅-1°last | Ra 1°-2° | Ra last 2 | Notes |
|---|---|---|---|---|---|
| 2 | 21 | 0.07 | 2.6 - 2.9 | 3.9 - 4.2 | |
| 2 | 18 | 0.08 | 2.4 - 2.7 | 4.0 - 4.2 | 19° vibrating tendency of the piece |
| 2 | 25 | 0.20 | 2.3 - 2.6 | 5.9 - 6.0 | 1 piece with filter inclusion |
| 2 | 25 | 0.07 | 2.6 - 2.7 | 3.9 - 4.2 | 1 piece with inclusion |
| 2 | 30 | 0.20 | 2.6 - 3.1 | 5.7 - 6.0 | 28° vibrating tendency of the piece |
| 2 | 25 | 0.07 | 2.8 - 2.9 | 3.2 - 3.6 | |
| 2 | 24 | 0.10 | 3.0 - 2.7 | 3.6 - 3.7 | 2 pieces with inclusions |
| 2 | 20 | 0.10 | 2.6 - 3.1 | 3.9 - 4.0 | 3 pieces with inclusions |
| 3 | 26 | 0.05 | 2.5 - 2.6 | 3.9 - 3.9 | 1 piece with filter inclusion |
| 3 | 26 | 0.08 | 2.6 - 2.6 | 3.7 - 3.9 | 2 pieces with inclusions |
| 3 | 6 | 0.04 | 2.9 - 3.1 | 2.9 - 3.0 | 7° vibrating tendency of the piece |
| 3 | 24 | 0.10 | 2.8 - 3.3 | 3.3 - 3.4 | |
| 3 | 28 | 0.15 | 2.6 - 2.9 | 4.3 - 4.5 | 2 pieces with inclusions |
| Medium duration of a cutter: | | 22,90 pieces (+80%) | | | |
| % pieces included | | 4.02% (-20%) | | | |

FIG. 12 - PRECONDITIONED CAST IRON WITH REACTIVATION IN THE DIE - AUTOMATIC CASTING